# FASCICULE DE BREVET EUROPEEN

(11) **EP 3 935 281 B1**
(45) Date de publication et mention de la délivrance du brevet: **23.08.2023**
(21) Numéro de dépôt: 20725845.0
(22) Date de dépôt: 06.03.2020
(51) Int. Cl.: F04B 35/00, F04B 35/01, F04B 35/04, F04B 39/00

(54) **COMPRESSEUR THERMODYNAMIQUE HYBRIDE**
HYBRIDER THERMODYNAMISCHER KOMPRESSOR
HYBRID THERMODYNAMIC COMPRESSOR

(30) Priorité: 07.03.2019 FR 1902341
(43) Date de publication de la demande: 12.01.2022
(73) Titulaire: Boostheat, 69200 Vénissieux (FR)
(72) Inventeur: JOFFROY, Jean-Marc, 81500 CABANES (FR)
(74) Mandataire: Plasseraud IP
(86) Numéro de dépôt international: PCT/FR2020/050464
(87) Numéro de publication internationale: WO 2020/178537

(56) Documents cités:
- EP-A1- 0 373 792
- CA-A1- 2 479 572
- US-A- 3 921 400
- EDER F X ET AL: "VUILLEUMIER A HELIUM PRESSURISE", REVUE PRATIQUE DU FROID ET DU CONDITIONNEMENT D'AIR, PYC EDITION SA., PARIS, FR, vol. 44, no. 684, 24 avril 1989 (1989-04-24), pages 55-62, XP000024558, ISSN: 0370-6699

## Description

### Domaine technique

L'invention se rapporte aux compresseurs pour cycle de pompe à chaleur, et vise en particulier un compresseur thermodynamique hybride qui peut être mis en action par un compresseur thermique et/ou par une machine électrique réversible. L'invention se rapporte également aux chaudières hybrides comprenant un tel compresseur thermodynamique hybride.

### Contexte et Technique antérieure

Dans les solutions connues, on utilise très souvent un moteur électrique pour entraîner un compresseur lequel compresseur forme l'élément moteur d'un cycle de pompe à chaleur.

Il existe aussi des solutions basées sur un moteur à combustion pour entraîner un tel compresseur.

Ainsi, généralement les constructeurs d'équipements thermiques proposent des solutions permettant d'apporter des solutions thermodynamiques au marché avec :
1. Les pompes à chaleur électriques
2. Les pompes à chaleur thermiques
3. Les chaudières à micro-cogénération

La société demanderesse a aussi déjà proposé d'utiliser un compresseur thermodynamique dit 'thermique' d'un nouveau type pour former l'élément moteur d'un cycle de pompe à chaleur.

Toutefois, il est apparu avantageux de pouvoir proposer une solution plus souple selon les conditions d'utilisation du circuit de pompe à chaleur et la disponibilité de différentes formes d'énergie pour mouvoir le compresseur. En particulier, il s'agit de pouvoir à certains moments produire de l'énergie électrique à partir d'une source thermique comme produit auxiliaire (on parle donc de « cogénération »), et à d'autres moments utiliser de l'énergie électrique sans solliciter la source thermique.

### Résumé de l'invention

A cet effet, il est proposé un compresseur thermodynamique hybride pour compresser un fluide de travail, le compresseur comprenant au moins :
- un cylindre volumétrique (1) et un cylindre thermique (2) reliés entre eux mécaniquement par un système d'embiellage (5) et pneumatiquement par un circuit de liaison (12),
- une machine électrique réversible (6) reliée au système d'embiellage (5),
   le cylindre volumétrique comprenant une enceinte cylindrique avec un premier piston (81) qui sépare une première chambre (Ch1) d'une deuxième chambre (Ch2),
   le cylindre thermique comprenant une enceinte cylindrique avec un deuxième piston (82) qui sépare une troisième chambre (Ch3), dite chambre froide, d'une quatrième chambre (Ch4), laquelle peut être mise en contact thermique avec une source de chaleur (21) pour devenir une chambre chaude, et ainsi générer mouvement cyclé dans le cylindre thermique, le circuit de liaison reliant la deuxième chambre avec la troisième chambre,
   et concernant le système d'embiellage (5), le premier piston est relié à un rotor (52) par un premier embiellage (91), et le deuxième piston est relié, directement ou indirectement, audit rotor par un deuxième embiellage (92), avec un décalage angulaire prédéterminé (θd) fourni par le système d'embiellage entre le cycle du premier piston et le cycle du deuxième piston,
   le cylindre volumétrique étant équipé d'une voie d'admission avec un premier clapet anti retour (61) et d'une voie de sortie avec un deuxième clapet anti retour (62), pour délivrer du fluide de travail à une deuxième pression (Pout),
   et dans lequel la puissance produite dans le cylindre thermique est transmise au cylindre volumétrique essentiellement via le circuit de liaison et non via le système d'embiellage.

Grâce à ces dispositions, le cylindre volumétrique permet de pomper le fluide de travail dans le contexte d'un cycle de pompe à chaleur, ledit cylindre volumétrique étant mis en mouvement soit par l'effet du cylindre thermique qui lui est connecté et/ou par apport de la machine électrique.

On remarque, comme il sera vu ci-après, que c'est le même fluide de travail que l'on peut utiliser dans le cylindre thermique et le cylindre volumétrique ainsi que dans le circuit primaire de la pompe à chaleur.

On note déjà également que le cylindre volumétrique peut être à simple effet ou à double effet comme il sera vu ci-après.

Il faut noter que le décalage angulaire prédéterminé (θd) caractérise le retard du cycle volumétrique par rapport au cycle thermique et ce décalage angulaire prédéterminé peut être quelconque entre 50° et 130°. De préférence il pourra être obtenu par construction mécanique, avec le cas échéant une possibilité de réglage mécanique.

Sous le terme « premier clapet anti retour » on désigne ici le clapet d'admission du compresseur. Sous le terme « deuxième clapet anti retour» on désigne ici le clapet de refoulement du compresseur.

La clause « *la puissance produite dans le cylindre thermique est transmise au cylindre volumétrique essentiellement via le circuit de liaison et non via le système d'embiellage* » doit être comprise comme plus de la moitié de la puissance produite dans le cylindre thermique transite par le circuit de liaison fluide, de préférence plus de 75 % de la puissance produite dans le cylindre thermique transite par le circuit de liaison fluide.

Dans divers modes de réalisation de l'invention concernant le système, on peut éventuellement avoir recours en outre à l'une et/ou à l'autre des dispositions suivantes, prises isolément ou en combinaison.

Selon une option avantageuse, on pourra utiliser un même fluide de travail dans le cylindre thermique **et** dans le cylindre volumétrique, de préférence mais non exclusivement on peut choisir du **CO2** comme fluide de travail. Grâce à quoi, même si il se produit des fuites au niveau de la segmentation du premier piston, il n'y a aucun mélange de fluide, car le même fluide est présent de part et d'autre de ce piston. D'ailleurs, il en va de même pour le deuxième piston. Les contraintes d'étanchéité entre piston et chemise sont donc beaucoup moins critiques que dans le cas de l'utilisation de deux fluides distincts.

Selon une disposition, il est prévu:
- un mode de compression électrique dans lequel la source de chaleur est désactivée et la machine électrique fonctionne en moteur et
- un mode de compression thermique dans lequel la source de chaleur est activée et impulse un cycle de va-et-vient dans le cylindre thermique, le mouvement du premier piston étant imparti par le mouvement de va-et-vient du fluide de travail dans le circuit de liaison, et la machine électrique fonctionne en génératrice.

On remarque que dans chacun des deux modes, le système d'embiellage ne transmet qu'une partie auxiliaire de la puissance thermodynamique, et particulièrement dans le mode de compression thermique le système d'embiellage ne transmet qu'une partie auxiliaire de la puissance thermodynamique alors que la majeure partie passe par le circuit de liaison.

Selon une option complémentaire, on peut en outre prévoir un mode mixte, dans lequel le mouvement du premier piston dans le cylindre volumétrique est provoqué par l'apport cycle de chaleur dans la première chambre et par la machine électrique fonctionnant en moteur. On obtient ainsi une souplesse totale d'arbitrage entre la source thermique et la source électrique et l'arbitrage peut être fait quasiment en temps réel.

Selon une option, il est prévu que le déphasage prédéterminé (θd) soit compris entre 80° et 120°, de préférence voisin de 95°, le cycle volumétrique étant en retard de ce déphasage prédéterminé par rapport au cylindre thermique. Un tel décalage permet d'obtenir un optimum de rendement.

Selon une option, la course (T1) du premier piston (81) peut être supérieure à la course (T2) du deuxième piston (82). On peut ainsi équilibrer la puissance thermodynamique générée dans le cylindre thermique avec la puissance de pompage volumétrique utilisé dans le cylindre volumétrique et principalement selon les pressions opératoires.

Selon une autre configuration, la course (T2) du deuxième piston (82) peut être supérieure à la course (T1) du premier piston (81).

Selon une configuration, la cylindrée du cylindre thermique peut être comprise entre 1 litre et 5 litres. Selon une configuration, la cylindrée du cylindre volumétrique peut être comprise entre 1 litre et 5 litres.

Selon une configuration, la cylindrée du cylindre thermique peut être supérieure à la cylindrée du cylindre volumétrique. Selon une autre configuration, la cylindrée du cylindre volumétrique peut être supérieure à la cylindrée du cylindre thermique.

Selon une option, on peut prévoir l'agencement mécanique suivant : l'axe (Y1) du cylindre volumétrique et à l'axe (Y2) du cylindre thermique sont agencés substantiellement perpendiculairement l'un par rapport à l'autre, et dans lequel il peut être prévu un décalage complémentaire grâce à la position des manetons de liaison respectifs du premier embiellage (91) du deuxième embiellage (92). Grâce à ces dispositions, et au décalage angulaire voisin de 90°, on peut avoir un rotor tournant avec des manetons respectifs pour chaque cylindre à des positions angulaires proches voire identiques.

Selon une option, baptisée compresseur volumétrique « à simple effet », le cylindre volumétrique est utilisé en simple effet, et seule la première chambre (Ch1) est utilisée pour aspirer et refouler alors que la deuxième chambre fonctionne seulement en mode va-et-vient avec la troisième chambre au travers du circuit de liaison (12), la voie d'admission avec le premier clapet anti retour (61) et la voie de sortie avec le deuxième clapet anti retour (62) étant raccordés à la première chambre.

Selon une option, baptisée compresseur volumétrique « à double effet », le cylindre volumétrique est utilisé en double effet, avec le circuit de liaison (12) qui relie alors sélectivement via une vanne (4) la deuxième chambre avec la troisième chambre, et il est prévu un passage de transfert (7) depuis la première chambre vers la deuxième chambre, la première chambre étant équipée d'une voie d'admission avec le premier clapet anti retour (61), pour admettre du fluide de travail à une première pression (Pin), le passage de transfert comprenant un volume de stock tampon (3) avec un troisième clapet anti retour (63) entre la première chambre (Ch1) et le stock tampon et un quatrième clapet anti retour (64) entre le stock tampon et la deuxième chambre (Ch2) la voie de sortie avec le deuxième clapet anti retour (62) étant raccordés à la deuxième chambre.

Grâce à une telle configuration à double effet, le compresseur peut fournir un taux de compression plus élevée si nécessaire. Cette configuration permet aussi de bénéficier d'un relâchement de contraintes sur la segmentation.

Selon une disposition complémentaire de la configuration bi-étagée, lorsque le circuit de liaison (12) est équipé d'une telle vanne (4), dans le mode de compression électrique, ladite vanne (4) est fermée, la source de chaleur est désactivée et la machine électrique fonctionne en moteur et dans le mode de compression thermique, ladite vanne (4) est ouverte, la source de chaleur est activée et impulse un cycle de va-et-vient dans le cylindre thermique, le mouvement du premier piston étant imparti par le mouvement de va-et-vient du fluide de travail dans le circuit de liaison, et la machine électrique fonctionne en génératrice.

Selon une disposition complémentaire de la configuration mono-étagée, le circuit de liaison (12) peut être également équipé d'une telle vanne (4) avec un fonctionnement identique au regard des modes électrique et thermique.

Selon une option particulière, la tige du piston du cylindre volumétrique peut présenter un diamètre supérieur à celui de la tige du piston du cylindre thermique. Dans ces conditions, on peut observer un effet d'accroissement de la pression reliée à la diminution de surface.

La présente invention vise également une chaudière thermodynamique, pour apporter/retirer des calories dans/depuis un local d'intérêt, comprenant un compresseur thermique hybride tel que décrit précédemment, le compresseur thermique formant la fonction compression d'une boucle de type pompe à chaleur réversible comprenant au moins un circuit général de fluide de travail, un détendeur et au moins une unité extérieure.

Selon un mode particulier, la chaudière en question peut former une machine de cogénération avec une production d'électricité.

### Brève description des dessins

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :
- la figure 1 représente un diagramme d'un compresseur thermique hybride selon la présente invention, dans une version de pompage mono-étage, les composants étant représentés schématiquement à plat,
- la figure 2 représente une vue similaire à celle de la figure 1 dans une variante compresseur volumétrique bi-étagée.
- la figure 3 représente un mode de réalisation constructionnel du compresseur avec le cylindre thermique disposé perpendiculairement au cylindre volumétrique,
- la figure 4 représente un mode de réalisation similaire à celui de la figure 2 vu depuis le système d'embiellage et selon la direction du cylindre volumétrique
- la figure 5 représente un diagramme de cycle avec en ordonnée les pressions et les courses, pour la version mono étagée,
- la figure 6 représente un diagramme de cycle thermodynamique du cylindre thermique,
- la figure 7 représente un diagramme de cycle avec en ordonnée les pressions et les courses, pour la version bi étagée,
- la figure 8 illustre une vue schématique générale d'un système de pompe à chaleur réversible.

### Description des modes de réalisation

Sur les différentes figures, les mêmes références désignent des éléments identiques ou similaires. Pour des raisons de clarté de l'exposé, certains éléments ne sont pas nécessairement représentés à l'échelle.

### Généralités, pompe à chaleur à compresseur

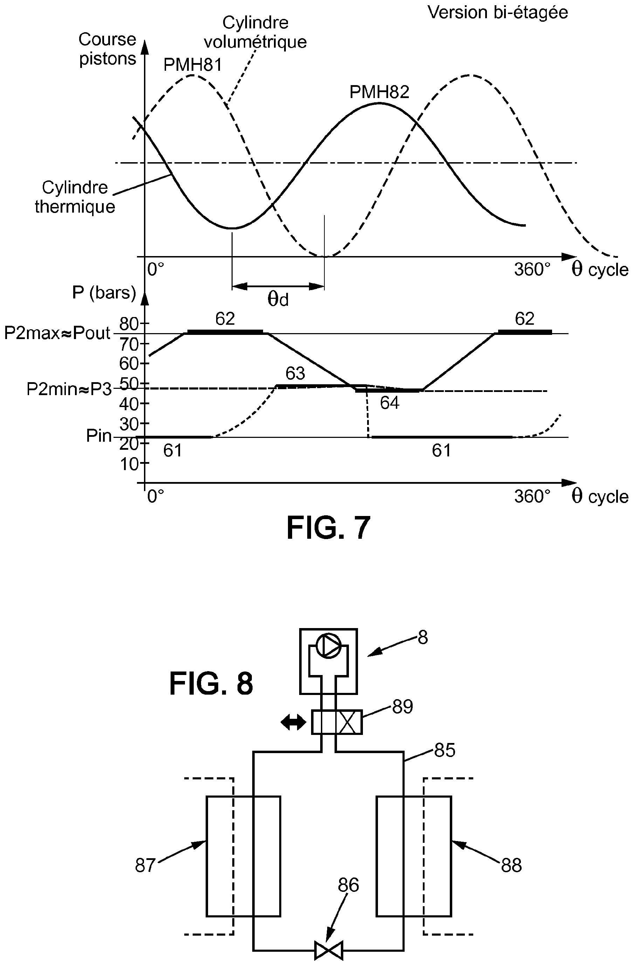

La figure 8 un système de pompe à chaleur qui comprend un compresseur thermique hybride **8** qui sera décrit plus loin en détails. Le compresseur 8 forme la fonction compression d'une boucle de type pompe à chaleur, qui peut être réversible tel qu'illustré ici ou bien non réversible.

Un tel système de pompe à chaleur tel qu'illustré ici comprend un circuit de fluide caloporteur **85,** un premier échangeur de chaleur **87** et un second échangeur de chaleur **88,** et un détendeur **86** qui joue le rôle inverse du compresseur. Dans le cas d'un système réversible, le détendeur **86** peut être doublé, chaque partie fonctionnant dans un sens et inopérant dans l'autre. Une vanne quatre voies **89** permet d'inverser le sens de circulation du fluide dans les échangeurs et le détendeur. Dans une première configuration, le système prélève des calories sur le premier échangeur de chaleur **87** et restitue ces calories sur le second échangeur de chaleur **88,** et dans la configuration opposée, le système prélève des calories sur le second échangeur de chaleur **88** et restitue ces calories sur le premier échangeur de chaleur **87.**

On s'intéresse en particulier au cas d'une chaudière intégrant une fonction de pompe à chaleur, avec prélèvement de calories sur une unité extérieure et délivrance de ces calories dans un local d'intérêt ou une habitation d'intérêt.

Dans ce cas, le système proposé est basé sur un compresseur thermique hybride **8** qui sera décrit plus loin en détails, avec un circuit général de fluide de travail (ou fluide 'frigorigène'), un détendeur et au moins une unité extérieure. La chaudière comprend le compresseur thermique hybride **8** pour la boucle de type pompe à chaleur et peut aussi délivrer des calories dans le local/habitation d'intérêt à partir d'un brûleur.

Généralement, le compresseur est équipé d'une voie d'admission avec un premier clapet anti retour **61** (appelé dans le métier « clapet d'admission ») et d'une voie de sortie avec un deuxième clapet anti retour **62** (appelé dans le métier « clapet de refoulement »). Par rapport au circuit primaire **85,** le compresseur aspire du fluide de travail par la voie d'admission à une première pression **Pin** et délivre du fluide de travail à une deuxième pression **Pout** par la voie de sortie.

### Compresseur - généralités - cylindres volumétrique et thermique

Le compresseur thermique hybride **8** comprend un cylindre volumétrique 1, un cylindre thermique **2** et une machine électrique réversible **6,** (M/G pour : Moteur Générateur, les deux fonctions étant possibles).

Comme il sera vu plus loin, le cylindre volumétrique **1** et un cylindre thermique **2** sont reliés entre eux mécaniquement par un système d'embiellage **5** et pneumatiquement par un circuit de liaison **12.**

S'agissant du cylindre volumétrique **1,** il comprend un premier piston noté **81** qui sépare une première chambre notée **Ch1** d'une deuxième chambre notée **Ch2,** sur lesquelles on reviendra plus loin. Le premier piston noté **81** se déplace dans une chemise **71** cylindrique de révolution autour d'un premier axe **Y1.**

Le cylindre volumétrique **1** forme au moins un étage de compresseur de type volumétrique pour le circuit primaire **85** du système de pompe à chaleur.

S'agissant du cylindre thermique **2,** il comprend une enceinte cylindrique avec un deuxième piston noté **82** qui sépare une troisième chambre notée **Ch3,** dite chambre froide, d'une quatrième chambre notée **Ch4.** Le premier piston noté **81** se déplace dans une chemise **72** cylindrique de révolution autour d'un deuxième axe **Y2.**

La troisième chambre **Ch3** peut être refroidie par un circuit de refroidissement, représenté symboliquement aux figures par le repère **26.**

La quatrième chambre **Ch4** peut être mise en contact thermique avec une source de chaleur **21** pour devenir une chambre chaude, et ainsi générer mouvement cyclé dans le cylindre thermique.

Les troisième et quatrième chambres **Ch3, Ch4** sont mises en communication fluide par un circuit extérieur à la chemise dans laquelle se déplace el deuxième piston **82.** Notamment il est prévu un régénérateur **29** qui maintient un gradient de température entre la partie froide et la partie chaude.

L'axe **Y2** est vertical avec la quatrième chambre disposée au-dessus de la troisième chambre **Ch3.**

À l'extérieur du cylindre **72,** il est prévu un passage permettant de faire transiter du fluide de la troisième chambre vers la quatrième et inversement. Plus précisément, au sommet de la quatrième chambre **Ch4,** il est prévu un orifice d'entrée sortie du fluide noté **23** puis un passage annulaire 24 dans la partie chaude jusqu'au régénérateur **29.**

Le passage se poursuit en dessous du régénérateur par un passage annulaire **25** dans la partie froide, passage qui débouche par le dessous dans la chambre froide. À cet endroit, le passage est également raccordé un orifice d'entrée sortie extérieur noté **27.**

La constitution et le fonctionnement d'un tel compresseur régénératif thermique est décrit dans le document WO2014/202885 émanant de la demanderesse et les enseignements de ce documents seront repris ici s'agissant du principe et du fonctionnement d'un tel compresseur régénératif thermique.

La différence par rapport à cette référence est qu'ici, dans la chambre froide Ch3, il n'y a pas une entrée d'aspiration et une sortie de refoulement distinctes, mais un seul raccordement vers l'extérieur qui aspire et refoule successivement dans un mouvement de va-et-vient de fluide dans le circuit de liaison 12.

Grâce au régénérateur **29** la différence de température entre la quatrième chambre **Ch4** et la troisième chambre **Ch3** reste supérieure à 500 °C. Typiquement la quatrième chambre se trouve à une température voisine 600° alors que la troisième chambre reste aux alentours de 50° du fait de l'effet du système de refroidissement. C'est ce gradient de température, et son maintien temporel, sui actionne le compresseur régénératif thermique.

La source chaude **21** est un brûleur, par exemple un brûleur de gaz. Toutefois il faut noter que la source chaude peut brûler tout autre type de combustible en sus du gaz. Dans d'autres configurations, la source chaude peut provenir d'une source de chaleur d'un autre type, solaire ou autre, sans combustion. On préférera un combustible non fossile.

Le circuit de liaison **12** relie sélectivement la deuxième chambre **Ch2** avec la troisième chambre **Ch3.** Une vanne **4,** optionnelle dans certains cas comme il sera vu plus loin, permet de fermer ou ouvrir sélectivement le passage de fluide entre la deuxième chambre **Ch2** et la troisième chambre **Ch3.** La vanne **4** peut être une électrovanne ou une vanne à commande manuelle.

On remarque que le circuit de liaison fait transiter du fluide de travail entre les deuxième et troisième chambres **Ch2, Ch3,** de plus c'est le même fluide qui va dans la quatrième chambre **Ch4.**

En outre, avantageusement, c'est aussi le même fluide qui est utilisé dans la première chambre **Ch1.** On remarque que grâce à l'utilisation d'un fluide unique, même s'il y a des fuites au niveau de la segmentation **78,** cela n'entraîne aucun problème excepté une performance très légèrement affectée, cette considération est vraie tant pour le cylindre thermique que pour le cylindre volumétrique.

C'est aussi le même fluide qui est utilisé dans le circuit primaire **85** du système de pompe à chaleur discuté à la figure 8.

Outre le circuit primaire **85,** il peut y avoir des circuits auxiliaires (représentés partiellement et en pointillés en Figure 8) couplés par des échangeurs thermiques mais sans aucun échange physique de fluide.

On peut choisir comme fluide de travail un gaz, de préférence mais non exclusivement, du **CO2** (R744 dans le jargon des chauffagistes/frigoristes). Toutefois, le principe de la présente invention peut être appliqué à d'autres fluides de travail.

### Système d'embiellage et agencement mécanique

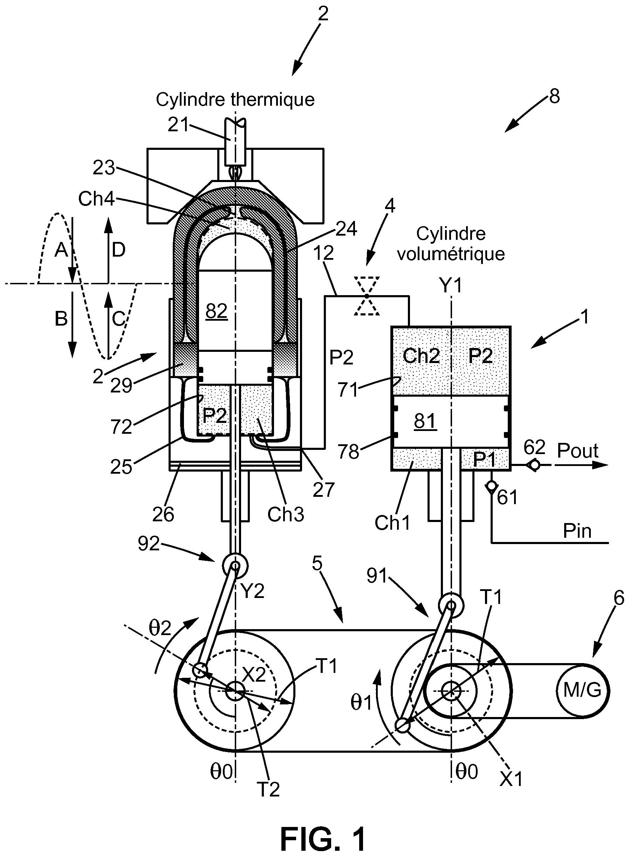

La figure 1 représente un diagramme schématique à plat d'un compresseur thermique, dans une version de pompage mono-étage. Les composants y sont représentés schématiquement à plat pour faciliter la compréhension. On a représenté pour la compréhension deux rotors liés en rotation, respectivement d'axe **X1** et **X2.**

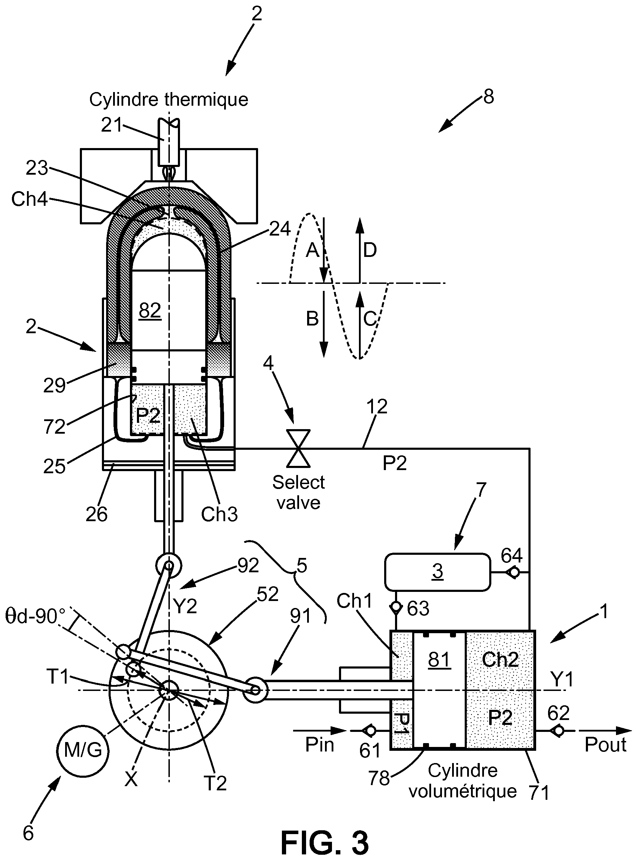

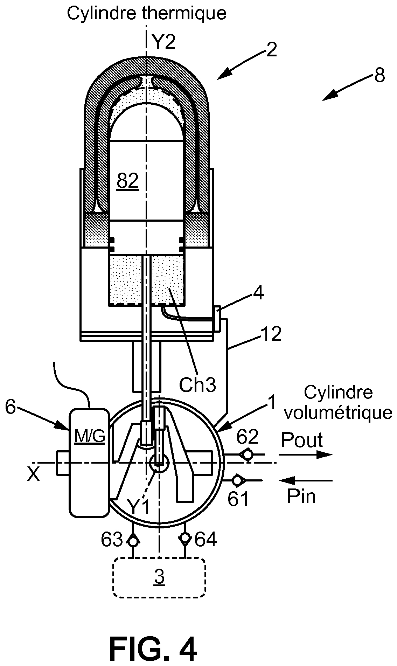

Les figures 3 et 4 représentant des configurations plus réalistes en matière de solution industrielle.

Le système d'embiellage **5** relie mécaniquement entre eux le cylindre volumétrique **1** et le cylindre thermique **2.**

Dans ce premier exemple (Fig. 1) le cylindre volumétrique est utilisé en simple effet. Seule la première chambre **Ch1** est utilisée pour aspirer et refouler du fluide dans le circuit primaire **85.** La deuxième chambre fonctionne seulement en mode va-et-vient avec la troisième chambre au travers du circuit de liaison **12.** La vanne 4 peut être absente.

La voie d'admission avec le premier clapet anti retour **61** et la voie de sortie avec le deuxième clapet anti retour **62** sont toutes deux raccordés à la première chambre **Ch1.**

### Compresseur - système d'embiellage

Le système d'embiellage **5** comprend un rotor **5** qui est monté à rotation sur un carter de compresseur autour de l'axe **X.** Ce rotor **5** forme un vilebrequin mais transmet peu d'effort mécanique, à l'inverse d'un vilebrequin classique.

Ce rotor **5** est formé comme une pièce en rotation avec des manivelles ; plus précisément, des manetons sont disposés à distance de l'axe **X.** Un premier maneton est fixé sur le rotor à une distance **T1/2** de l'axe **X;** sur ce premier maneton est fixé le pied d'une première bielle 91. Un deuxième maneton est fixé sur le rotor à une distance T2/2 de l'axe **X;** sur ce deuxième maneton est fixé le pied d'une deuxième bielle 92.

La première bielle **91** est reliée par sa tête à une première tige solidaire du premier piston **81.** La deuxième bielle **92** est reliée par sa tête à une deuxième tige solidaire du deuxième piston **82.**

**T1** est donc la course du premier piston **81.** La cylindrée du cylindre volumétrique est **T1** x **S1,** S1 étant la section de la première chemise **71.**

**T2** est donc la course du deuxième piston **82.** La cylindrée du cylindre thermique est **T2** x **S2, S2** étant la section de la deuxième chemise **72.**

Au point mort bas du premier piston, le volume résiduel de la première chambre **Ch1** est très petit, moins de 5% de la cylindrée, préférentiellement moins de 2% de la cylindrée.

Au point mort haut du premier piston, le volume résiduel de la deuxième chambre **Ch2** peut être également petit, moins de 5% de la cylindrée, préférentiellement moins de 2% de la cylindrée.

Toutefois, dans une configuration mono-étagée particulière, comme la deuxième chambre **Ch2** n'est pas utilisée pour la fonction compression volumétrique, le volume résiduel de la deuxième chambre **Ch2** au point mort haut du premier piston peut être moins petit, par exemple entre 5% et 15% de la cylindrée.

Au point mort bas du deuxième piston 82, le volume résiduel de la troisième chambre **Ch3** est très petit, moins de 4% de la cylindrée, préférentiellement moins de 2% de la cylindrée. Au point mort haut du premier piston, le volume résiduel de la quatrième chambre **Ch4** est aussi très petit, moins de 4% de la cylindrée, préférentiellement moins de 2% de la cylindrée.

Le premier piston est relié au rotor par le premier embiellage **91,** sur la figure 1, avec une position courante notée **θ1** par rapport à la position de référence point mort bas notée **θ0**.

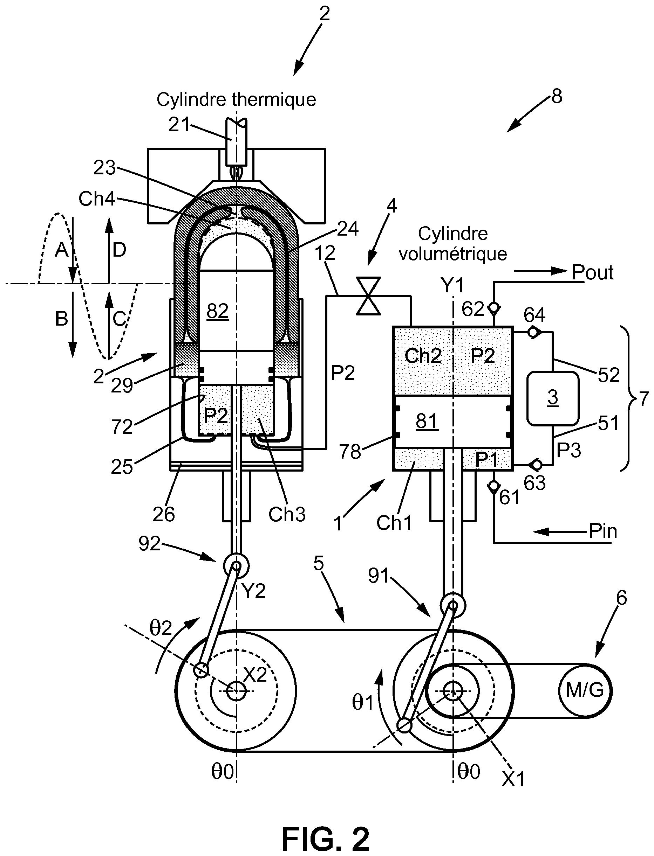

Le deuxième piston est relié (indirectement via une courroie dans le cas de figure schématique « à plat » des figures 1 et 2) au rotor par le deuxième embiellage **92,** avec une position courante notée **θ2** par rapport à la position de référence point mort bas notée **θ0**.

Aux figures, la rotation se produit dans le sens horaire pour les deux embiellages. Le cycle volumétrique 1 est en retard d'un certain angle par rapport au cylindre thermique 2.

On constate la présence un décalage angulaire noté **θd** entre le cycle du premier piston et le cycle du deuxième piston.

Ce décalage angulaire **θd** est prédéterminé et est fourni intrinsèquement par le système d'embiellage. Le déphasage prédéterminé **θd** sera généralement choisi pour être compris entre 80° et 120°. Les inventeurs ont découverts que l'optimum est voisin de 95°, le cycle volumétrique étant en retard de ce déphasage prédéterminé par rapport au cylindre thermique. Un tel décalage permet d'obtenir un optimum de rendement.

Sur les figures 3 et 4, le deuxième embiellage **92** du deuxième piston 2 est relié directement au rotor unique **52,** tout comme le premier embiellage **91.** L'axe **Y1** du cylindre volumétrique et l'axe **Y2** du cylindre thermique sont agencés perpendiculairement l'un par rapport à l'autre.

Moyennant quoi, avec cette disposition à angle droit, on peut avoir un rotor tournant avec des manetons respectifs pour chaque cylindre à des positions angulaires proches voire identiques, avec un décalage complémentaire des manetons qui s'exprime alors sous la forme **θd - 90** (cf Fig 3).

Généralement, on a un décalage angulaire réel voisin de 90° et donc le décalage physique des premier et deuxième manetons reste relativement petit, ainsi l'usinage d'une telle pièce reste conventionnelle et à coût maîtrisé.

Dans une variante, au lieu d'avoir une pièce à manivelles classiques, on pourrait avoir deux excentriques associés l'un à l'autre et réglables en position angulaire l'un par rapport à l'autre pour pouvoir régler le décalage angulaire prédéterminé **θd** en fonction de l'application.

### Circuit pneumatique - Mono étage

En version mono étage, en Figure 1, c'est-à-dire en simple effet, seule la première chambre **Ch1** est utilisée pour aspirer et refouler. On agence le premier clapet anti retour **61** sur la voie d'admission et la voie de sortie avec le deuxième clapet anti retour **62,** tous deux sont raccordés à la première chambre.

En simple effet, la deuxième chambre **Ch2** fonctionne seulement en mode va-et-vient avec la troisième chambre **Ch3** au travers du circuit de liaison **12.**

Dans cette configuration, la première chambre **Ch1** aspire du fluide de travail par la voie d'admission à une première pression **Pin** et délivre du fluide de travail à une deuxième pression **Pout** par la voie de sortie.

### Bi-étage

Dans cette configuration (cf. figures 2 et 3), les deux chambres du cylindre volumétrique sont mises à contribution pour élever la pression de **Pin** à **Pout.**

Un passage de transfert **7** relie la première chambre **Ch1** à la deuxième chambre **Ch2.** La première chambre est équipée de la voie d'admission avec le premier clapet anti retour **61** déjà mentionnée, pour admettre du fluide de travail à une première pression **Pin.** C'est la deuxième chambre **Ch2** auquel est raccordée la voie de sortie avec le deuxième clapet anti retour **62.**

Le passage de transfert **7** comprend un volume de stock tampon **3.** Le passage de transfert comprend un troisième clapet anti retour **63** pour transférer du fluide depuis la première chambre **Ch1** vers le stock tampon **3** et un quatrième clapet anti retour **64** pour transférer du fluide depuis le stock tampon **3** vers la deuxième chambre **Ch2.** La voie de sortie avec le deuxième clapet anti retour **62** est raccordée à la deuxième chambre.

Le stock tampon **3** présente un volume suffisant pour que le volume introduit et soutiré pendant un cycle d'un tour de rotor représente une quantité de fluide d'au plus 10 % du volume présent dans le stock tampon 3.

### Fonctionnement et Commande

Le compresseur est qualifié de 'hybride' ; en effet, il peut fonctionner selon au moins les deux modes de fonctionnement suivants, électrique et thermique.

Mode électrique : il s'agit d'un mode de compression électrique dans lequel la source de chaleur **21** est désactivée, la machine électrique fonctionne en moteur et la vanne **4** (si elle est présente) est fermée. Dans ce mode électrique, il n'y a pas de puissance produite dans le cylindre thermique. On note que le cylindre thermique **2** ne présente pas un frein significatif, le deuxième piston fonctionne en mode déplaceur simple.

Mode thermique et cogénération: il s'agit d'un mode de compression thermique dans lequel la vanne **4** est ouverte (si présente), la source de chaleur **21** est activée et impulse un cycle de va-et-vient dans le cylindre thermique **2,** le mouvement du premier piston **81** étant imparti par le mouvement de va-et-vient du fluide de travail dans le circuit de liaison, et dans lequel le système d'embiellage **5** ne transmet qu'une partie auxiliaire de la puissance thermodynamique et la machine électrique fonctionne en génératrice.

Dans cette configuration, la puissance produite dans le cylindre thermique **2** est transmise au cylindre volumétrique **1** essentiellement via le circuit de liaison **12** et non via le système d'embiellage **5.** Typiquement, on pourra avoir plus de 60% de la puissance produite dans le cylindre thermique **2** transmise au cylindre volumétrique **1** au travers du circuit de liaison **12.**

Selon une configuration, la logique de commande peut imposer un choix binaire, à savoir exclusivement soit le mode électrique soit le mode thermique.

Selon une autre configuration, la logique de commande peut utiliser un mode mixte avec une contribution quelconque de la source thermique et de la source électrique. On peut ainsi mettre à profit un excédent électrique local est complété par des calories issues de la source thermique tout cela pour mouvoir le compresseur.

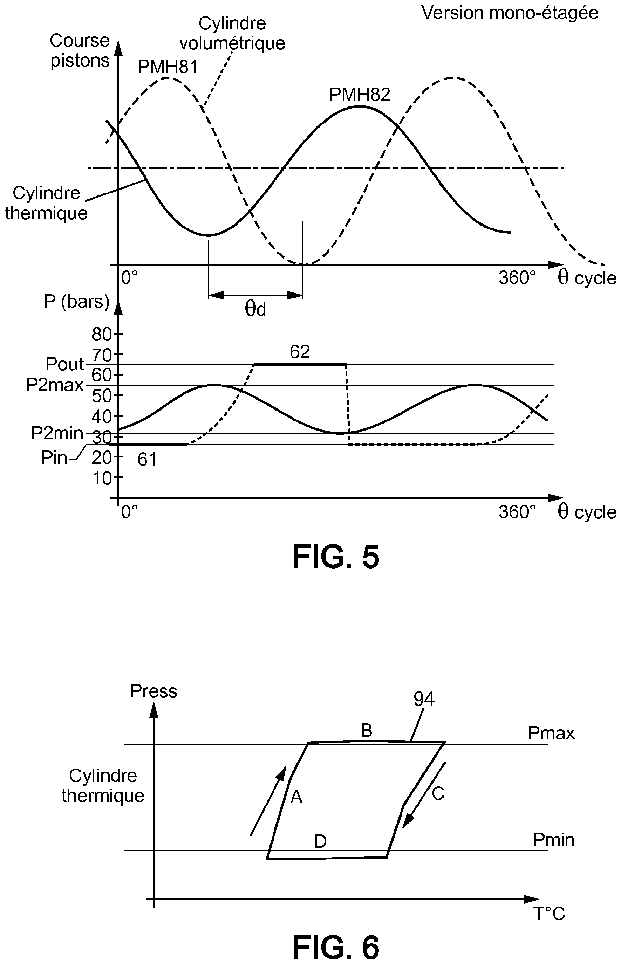

La Figure 6 illustre le fonctionnement thermodynamique du compresseur régénératif thermique. Les différentes phases A,B,C,D illustrent chacune un déplacement dans le diagramme pression versus température. Les différentes phases A,B,C,D correspondent chacune à un quart de cycle du deuxième piston comme illustré aux figures 1, 2 et 3.

Comme expliqué plus en détails dans le document précité WO2014/202885, la surface embrassée par la courbe **94** (cycle ABCD) de la figure 6 représente le travail thermodynamique fourni par cylindre thermique **2.**

Sur la figure 5, qui considère un régime établi dans une configuration mono-étagée, le diagramme des courses et pressions montre que la pression **P2** dans le cylindre thermique **2** évolue entre **P2min** lorsque la température du fluide est à son minimum dans le cylindre thermique **2** et **P2max** lorsque la température du fluide est à son maximum. **Pmax** est atteint au voisinage du point mort bas du piston 82. **Pmin** est atteint au voisinage du point mort haut du piston **82.**

En mono étage, les pressions **Pmin** et **Pmax** n'ont pas de relation contrainte par rapport aux valeurs de pressions **Pin** et **Pout.**

Dans le mode thermique, on dimensionne la puissance thermique et donc l'amplitude P2max - P2min, ainsi que la section et la course du piston pour que la puissance thermique soit supérieure ou égale à la puissance de pompage à développer dans le cylindre volumétrique **1.**

### C'est-à-dire : W2 > W1, où

**W1** représente la puissance de pompage développée dans le cylindre volumétrique **1** et **W2** représente la puissance thermodynamique développée dans le cylindre thermique **2.** La puissance générée par le cylindre thermique est proportionnelle à sa pression moyenne (P2max+P2min)/2.

Si **W6** exprime la puissance motrice de la machine électrique 6, alors en mode thermique, on peut exprimer : **W1** = **W2** + **W6,**

Et en vertu de **W2** > **W1,** nous avons **W6** négatif, et donc la machine électrique 6 qui fonctionne en génératrice. **W6** représente la puissance de co-génération.

Dans le mode électrique, **W2**=0 (source **21** arrêté et vanne **4** fermée) et c'est la machine électrique **6** qui fonctionne en moteur et par conséquent **W1** = **W6.** Le contrôleur de la machine électrique ajuste les signaux de commande pour atteindre une valeur de consigne en vitesse par exemple sur le fonctionnement du cylindre volumétrique 1.

Dans la configuration mono-étagée, la vanne 4 peut être présente ou non. Dans le mode électrique, on peut utiliser les chambres Ch3 et Ch4 comme des chambres de compensation en relation avec la deuxième chambre Ch2. Sinon on peut aussi prévoir un volume résiduel suffisant de Ch2 au point port haut du premier piston 81.

Sur la figure 7, qui considère un régime établi en configuration bi-étage, le diagramme des courses et pressions montre que la pression **P3** est relativement stable. La pression **P2max** correspond substantiellement à la pression **Pout.** La pression **P2min** correspond substantiellement à la pression **P3.**

La pression **P1** évolue entre **Pin** et **P3.** La pression **P2** évolue entre **P3** et **Pout.**

La figure 7 illustre les ouvertures séquentielles des quatre clapets anti-retour **61,62,63,64.** L'ouverture de chaque clapet est représentée en figure 7 par un trait épais horizontal associé au numéro de clapet.

On constate une ouverture séquentielle des vannes **61** puis **62** puis **63** puis **64** avec un recouvrement temporel qui peut être plus ou moins grand selon les tarages respectifs des clapets anti-retour.

Sur le haut de la figure, les positions respectives des pistons 81,82 montrent le décalage angulaire prédéterminé **θd,** avec ici un retard de 90°C du cylindre volumétrique.

Sur l'exemple de la figure 7, **Pin** est voisin de 25 bars, **P3** est voisin de 50 bars, **Pout** est voisin de 75 bars.

Sur l'exemple de la figure 5, **Pin** est voisin de 25 bars, **Pout** est voisin de 65 bars.

### Autres considérations

D'une façon générale pour les pressions, Pin est typiquement compris entre 15 et 40 bars et Pout est typiquement compris entre 60 et 90 bars.

Les cylindrées peuvent être choisies en fonction du besoin de puissance. Dans certains cas type, la cylindrée du cylindre thermique peut être comprise entre 1 litre et 5 litres. Selon une configuration, la cylindrée du cylindre volumétrique peut être comprise entre 1 litre et 5 litres.

Dans certains cas type, la course **T1** est plus grande que **T2.** Dans certains autres cas type, la section **S1** est plus grande que **S2.**

Dans certains cas type, le volume du buffer tampon **3** peut être compris entre 10 litre et 25 litres.

On remarque que dans la version bi-étagée, les contraintes d'étanchéité au niveau de la segmentation **78** peuvent être relâchées car les pressions moyennes de part et d'autre du piston **81** sont égales.

## Revendications

1. Compresseur thermodynamique hybride (8) pour compresser un fluide de travail, le compresseur comprenant au moins :
- un cylindre volumétrique (1) et un cylindre thermique (2) reliés entre eux mécaniquement par un système d'embiellage (5) et pneumatiquement par un circuit de liaison (12),
- une machine électrique réversible (6) reliée au système d'embiellage (5),
le cylindre volumétrique comprenant une enceinte cylindrique avec un premier piston (81) qui sépare une première chambre (Ch1) d'une deuxième chambre (Ch2),
le cylindre thermique comprenant une enceinte cylindrique avec un deuxième piston (82) qui sépare une troisième chambre (Ch3), dite chambre froide, d'une quatrième chambre (Ch4), laquelle peut être mise en contact thermique avec une source de chaleur (21) pour devenir une chambre chaude, et ainsi générer mouvement cyclé dans le cylindre thermique, le circuit de liaison (12) reliant la deuxième chambre avec la troisième chambre,
et concernant le système d'embiellage (5), le premier piston est relié à un rotor (52) par un premier embiellage (91), et le deuxième piston est relié, directement ou indirectement, audit rotor par un deuxième embiellage (92), avec un décalage angulaire prédéterminé (θd) fourni par le système d'embiellage entre le cycle du premier piston et le cycle du deuxième piston,
le cylindre volumétrique étant équipé d'une voie d'admission avec un premier clapet anti retour (61) et d'une voie de sortie avec un deuxième clapet anti retour (62), pour délivrer du fluide de travail à une deuxième pression (Pout),
et dans lequel la puissance produite dans le cylindre thermique est transmise au cylindre volumétrique essentiellement via le circuit de liaison et non via le système d'embiellage.

2. Compresseur thermodynamique hybride selon la revendication 1, dans lequel le cylindre thermique (2) comprend une chemise (72) et la quatrième chambre (Ch4) est reliée fluidiquement à la troisième chambre (Ch3) par un circuit extérieur à la chemise (24,25) via un régénérateur (29).

3. Compresseur thermodynamique hybride selon l'une des revendications 1 à 2, dans lequel un même fluide de travail est utilisé dans le cylindre thermique et dans le cylindre volumétrique, de préférence mais non exclusivement du CO2.

4. Compresseur thermodynamique hybride l'une des revendications 1 à 3, dans lequel on prévoit :
- un mode de compression électrique dans lequel la source de chaleur est désactivée et la machine électrique fonctionne en moteur et
- un mode de compression thermique dans la source de chaleur est activée et impulse un cycle de va-et-vient dans le cylindre thermique, le mouvement du premier piston étant imparti par le mouvement de va-et-vient du fluide de travail dans le circuit de liaison, et
dans lequel le système d'embiellage ne transmet qu'une partie auxiliaire de la puissance thermodynamique et la machine électrique fonctionne en génératrice.

5. Compresseur thermodynamique hybride selon la revendication 4, dans lequel on prévoit en outre un mode mixte, dans lequel le mouvement du premier piston dans le cylindre volumétrique est provoqué par l'apport cycle de chaleur dans la première chambre et par la machine électrique fonctionnant en moteur.

6. Compresseur thermodynamique hybride l'une des revendications 1 à 5, dans lequel le déphasage prédéterminé (θd) est compris entre 80° et 120°, de préférence voisin de 95°, le cycle volumétrique étant en retard de ce déphasage prédéterminé par rapport au cylindre thermique.

7. Compresseur thermodynamique hybride selon l'une des revendications 1 à 6, dans lequel l'axe (Y1) du cylindre volumétrique et à l'axe (Y2) du cylindre thermique sont agencés substantiellement perpendiculairement l'un par rapport à l'autre, et dans lequel il peut être prévu un décalage complémentaire grâce à la position des manetons de liaison respectifs du premier embiellage (91) du deuxième embiellage (92).

8. Compresseur thermodynamique hybride selon l'une des revendications 1 à 7, dans lequel le cylindre volumétrique est utilisé en simple effet, et dans lequel seule la première chambre (Ch1) est utilisée pour aspirer et refouler alors que la deuxième chambre fonctionne seulement en mode va-et-vient avec la troisième chambre au travers du circuit de liaison (12), la voie d'admission avec le premier clapet anti retour (61) et la voie de sortie avec le deuxième clapet anti retour (62) étant raccordés à la première chambre.

9. Compresseur thermodynamique hybride selon l'une des revendications 1 à 7, dans lequel le cylindre volumétrique est utilisé en double effet, avec le circuit de liaison (12) qui relie alors sélectivement via une vanne (4) la deuxième chambre avec la troisième chambre, et dans lequel il est prévu un passage de transfert (7) depuis la première chambre vers la deuxième chambre, la première chambre étant équipée de la voie d'admission avec le premier clapet anti retour (61), pour admettre du fluide de travail à une première pression (Pin),
le passage de transfert comprenant un volume de stock tampon (3) avec un troisième clapet anti retour (63) entre la première chambre (Ch1) et le stock tampon et un quatrième clapet anti retour (64) entre le stock tampon et la deuxième chambre (Ch2), la voie de sortie avec le deuxième clapet anti retour (62) étant raccordés à la deuxième chambre.

10. Chaudière thermodynamique, pour apporter/retirer des calories dans/depuis un local d'intérêt, comprenant un compresseur thermique hybride (8) selon l'une des revendications précédentes, le compresseur thermique formant la fonction compression d'une boucle de type pompe à chaleur réversible comprenant au moins un circuit général de fluide de travail, un détendeur et au moins une unité extérieure.

11. Chaudière thermodynamique, selon la revendication 10, elle-même en combinaison avec la revendication 4, ladite chaudière étant alors une machine de cogénération avec une production d'électricité.

## Patentansprüche

1. Hybrider thermodynamischer Kompressor (8) zum Komprimieren eines Arbeitsfluids, wobei der Kompressor wenigstens Folgendes umfasst:
- einen volumetrischen Zylinder (1) und einen thermischen Zylinder (2), die durch ein Verbindungsstangensystem (5) mechanisch und durch einen Verbindungskreislauf (12) pneumatisch miteinander verbunden sind,
- eine umkehrbare elektrische Maschine (6), die mit dem Verbindungsstangensystem (5) verbunden ist,
wobei der volumetrische Zylinder einen zylindrischen Raum mit einem ersten Kolben (81) umfasst, der eine erste Kammer (Ch1) von einer zweiten Kammer (Ch2) trennt, wobei der thermische Zylinder einen zylindrischen Raum mit einem zweiten Kolben (82) umfasst, der eine dritte Kammer (Ch3), genannt kalte Kammer, von einer vierten Kammer (Ch4) trennt, die in thermischen Kontakt mit einer Wärmequelle (21) gebracht werden kann, um zu einer warmen Kammer zu werden und so eine zyklische Bewegung in dem thermischen Zylinder zu erzeugen, wobei der Verbindungskreislauf (12) die zweite Kammer mit der dritten Kammer verbindet,
und wobei, was das Verbindungsstangensystem (5) betrifft, der erste Kolben durch eine erste Verbindungsstange (91) mit einem Rotor (52) verbunden ist und der zweite Kolben mit einer durch das Verbindungsstangensystem hergestellten vorbestimmten Winkelverschiebung (θd) zwischen dem Zyklus des ersten Kolbens und dem Zyklus des zweiten Kolbens durch eine zweite Verbindungsstange (92) direkt oder indirekt mit dem Rotor verbunden ist,
wobei der volumetrische Zylinder mit einem Einlasskanal mit einem ersten Rückschlagventil (61) und einem Auslasskanal mit einem zweiten Rückschlagventil (62) versehen ist, um ein Arbeitsfluid mit einem zweiten Druck (Pout) abzugeben,
und wobei die in dem thermischen Zylinder erzeugte Leistung im Wesentlichen über den Verbindungskreislauf und nicht über das Verbindungsstangensystem zu dem volumetrischen Zylinder übertragen wird.

2. Hybrider thermodynamischer Kompressor nach Anspruch 1, wobei der thermische Zylinder (2) einen Mantel (72) umfasst und die vierte Kammer (Ch4) durch einen Kreislauf außerhalb des Mantels (24, 25) über einen Regenerator (29) fluidmäßig mit der dritten Kammer (Ch3) verbunden ist.

3. Hybrider thermodynamischer Kompressor nach einem der Ansprüche 1 bis 2, wobei im thermischen Zylinder und im volumetrischen Zylinder das gleiche Arbeitsfluid, vorzugsweise, aber nicht ausschließlich CO2, verwendet wird.

4. Hybrider thermodynamischer Kompressor nach einem der Ansprüche 1 bis 3, wobei Folgendes vorgesehen ist:
- ein elektrischer Kompressionsmodus, bei dem die Wärmequelle deaktiviert ist und die elektrische Maschine als Motor arbeitet, und
- ein thermischer Kompressionsmodus, bei dem die Wärmequelle aktiviert ist und einen Hin- und Herbewegungszyklus in dem thermischen Zylinder anregt, wobei die Bewegung des ersten Kolbens durch die hin- und hergehende Bewegung des Arbeitsfluids in dem Verbindungskreislauf bewirkt wird und
wobei das Verbindungsstangensystem nur einen Hilfsanteil der thermodynamischen Leistung überträgt und die elektrische Maschine als Generator arbeitet.

5. Hybrider thermodynamischer Kompressor nach Anspruch 4, wobei darüber hinaus ein Mischmodus vorgesehen ist, bei dem die Bewegung des ersten Kolbens in dem volumetrischen Zylinder durch die zyklische Zufuhr von Wärme in die erste Kammer und durch die als Motor arbeitende elektrische Maschine bewirkt wird.

6. Hybrider thermodynamischer Kompressor nach einem der Ansprüche 1 bis 5, wobei die vorbestimmte Phasenverschiebung (θd) zwischen 80° und 120°, vorzugsweise nahe bei 95°, liegt, wobei der volumetrische Zyklus gegenüber dem thermischen Zylinder um diese vorbestimmte Phasenverschiebung verzögert ist.

7. Hybrider thermodynamischer Kompressor nach einem der Ansprüche 1 bis 6, wobei die Achse (Y1) des volumetrischen Zylinders und die Achse (Y2) des thermischen Zylinders im Wesentlichen senkrecht zueinander angeordnet sind und wobei dank der Position der jeweiligen Verbindungszapfen der ersten Verbindungsstange (91) und der zweiten Verbindungsstange (92) eine komplementäre Verschiebung vorgesehen werden kann.

8. Hybrider thermodynamischer Kompressor nach einem der Ansprüche 1 bis 7, wobei der volumetrische Zylinder einfachwirkend betrieben wird und wobei nur die erste Kammer (Ch1) zum Ansaugen und Ausstoßen verwendet wird, während die zweite Kammer über den Verbindungskreislauf (12) nur im hin- und hergehenden Modus mit der dritten Kammer arbeitet, wobei der Einlasskanal mit dem ersten Rückschlagventil (61) und der Auslasskanal mit dem zweiten Rückschlagventil (62) mit der ersten Kammer verbunden sind.

9. Hybrider thermodynamischer Kompressor nach einem der Ansprüche 1 bis 7, wobei der volumetrische Zylinder mit dem Verbindungskreislauf (12), der dann selektiv über ein Ventil (4) die zweite Kammer mit der dritten Kammer verbindet, doppeltwirkend betrieben wird, und wobei ein Transferdurchlass (7) von der ersten Kammer zur zweiten Kammer vorgesehen ist, wobei die erste Kammer mit dem Einlasskanal mit dem ersten Rückschlagventil (61) versehen ist, um Arbeitsfluid mit einem ersten Druck (Pin) einzulassen,
wobei der Transferdurchlass ein Puffervorratsvolumen (3) mit einem dritten Rückschlagventil (63) zwischen der ersten Kammer (Ch1) und dem Puffervorrat und einem vierten Rückschlagventil (64) zwischen dem Puffervorrat und der zweiten Kammer (Ch2) umfasst, wobei der Auslasskanal mit dem zweiten Rückschlagventil (62) mit der zweiten Kammer verbunden ist.

10. Thermodynamischer Kessel zum Einbringen/Entnehmen von Kalorien in einen /aus einem Raum von Interesse, umfassend einen hybriden thermischen Kompressor (8) nach einem der vorhergehenden Ansprüche, wobei der thermische Kompressor die Kompressionsfunktion einer Schleife vom Typ reversible Wärmepumpe bildet, die wenigstens einen allgemeinen Arbeitsfluidkreislauf, ein Druckminderungsventil und wenigstens eine Außeneinheit umfasst.

11. Thermodynamischer Kessel nach Anspruch 10, seinerseits in Kombination mit Anspruch 4, wobei der Kessel dann eine Kraft-Wärme-Kopplungsmaschine mit Stromerzeugung ist.

## Claims

1. Hybrid thermodynamic compressor (8) for compressing a working fluid, the compressor comprising at least:
- one volumetric cylinder (1) and one thermal cylinder (2) connected to each other mechanically by a connecting rod system (5) and pneumatically by a connection circuit (12),
- one reversible electric machine (6) connected to the connecting rod system (5), the volumetric cylinder comprising a cylindrical enclosure with a first piston (81) which separates a first chamber (Ch1) from a second chamber (Ch2),
the thermal cylinder comprising a cylindrical enclosure with a second piston (82) which separates a third chamber (Ch3), called cold chamber, from a fourth chamber (Ch4), which can be brought into thermal contact with a heat source (21) to become a hot chamber, and thus generate a cycled movement in the thermal cylinder, the connection circuit (12) connecting the second chamber with the third chamber,
and concerning the connecting rod system (5), the first piston is connected to a rotor (52) by a first connecting rod assembly (91), and the second piston is connected, directly or indirectly, to said rotor by a second connecting rod assembly (92), with a predetermined angular offset (θd) provided by the connecting rod system between the cycle of the first piston and the cycle of the second piston,
the volumetric cylinder being equipped with an inlet path with a first non-return valve (61) and an outlet path with a second non-return valve (62), to deliver the working fluid at a second pressure (Pout),
and wherein the power produced in the thermal cylinder is transmitted to the volumetric cylinder essentially via the connection circuit and not via the connecting rod system.

2. Hybrid thermodynamic compressor according to claim 1, wherein the thermal cylinder (2) comprises a cylinder sleeve (72) and the fourth chamber (Ch4) is fluidly coupled to the third chamber (Ch3) through a fluid circuit outside the cylinder sleeve (24, 25) via a regenerator (29).

3. Hybrid thermodynamic compressor according to one of claims 1 to 2, wherein the same working fluid is used in the thermal cylinder and in the volumetric cylinder, preferably but not exclusively CO₂.

4. Hybrid thermodynamic compressor according to one of claims 1 to 3, wherein there is provided:
- an electric compression mode in which the heat source is deactivated and the electric machine operates as a motor and
- a thermal compression mode in which the heat source is activated and pulses a reciprocating cycle in the thermal cylinder, the movement of the first piston being imparted by the reciprocating movement of the working fluid in the connection circuit, and in which the connecting rod system transmits only an auxiliary portion of the thermodynamic power and the electric machine operates as a generator.

5. Hybrid thermodynamic compressor according to claim 4, wherein a mixed mode is further provided, in which the movement of the first piston in the volumetric cylinder is caused by the heat cycle supply in the first chamber and by the electric machine operating as a motor.

6. Hybrid thermodynamic compressor according to one of claims 1 to 5, wherein the predetermined phase shift (θd) is comprised between 80° and 120°, preferably close to 95°, the volumetric cycle being in delay of this predetermined phase shift relative to the thermal cylinder.

7. Hybrid thermodynamic compressor according to one of claims 1 to 6, wherein the axis (Y1) of the volumetric cylinder and the axis (Y2) of the thermal cylinder are arranged substantially perpendicular to each other, and wherein a complementary offset can be provided thanks to the position of the respective connecting crankpins of the first connecting rod assembly (91) of the second connecting rod assembly (92).

8. Hybrid thermodynamic compressor according to one of claims 1 to 7, wherein the volumetric cylinder is used as a single-acting cylinder, and wherein only the first chamber (Ch1) is used for sucking and discharging while the second chamber operates only in the reciprocating mode with the third chamber through the connection circuit (12), the inlet path with the first non-return valve (61) and the outlet path with the second non-return valve (62) being coupled to the first chamber.

9. Hybrid thermodynamic compressor according to one of claims 1 to 7, wherein the volumetric cylinder is used as a double-acting cylinder, with the connection circuit (12) which then selectively connects via a valve (4) the second chamber with the third chamber, and wherein a transfer passage (7) is provided from the first chamber to the second chamber, the first chamber being equipped with the inlet path with the first non-return valve (61), to admit the working fluid at a first pressure (Pin),
the transfer passage comprising a buffer stock volume (3) with a third non-return valve (63) between the first chamber (Ch1) and the buffer stock and a fourth non-return valve (64) between the buffer stock and the second chamber (Ch2), the outlet path with the second non-return valve (62) being coupled to the second chamber.

10. Thermodynamic boiler, for supplying/removing calories in/from a room of interest, comprising a hybrid thermal compressor (8) according to one of the preceding claims, the thermal compressor forming the compression function of a reversible heat pump type loop comprising at least one general working fluid circuit, an expander and at least one outdoor unit.

11. Thermodynamic boiler according to claim 10, itself in combination with claim 4, said boiler then being a cogeneration machine with electricity production.
